# EUROPEAN PATENT APPLICATION

(11) **EP 3 495 865 A1**
(43) Date of publication of application: **12.06.2019**
(21) Application number: 17205938.8
(22) Date of filing: 07.12.2017
(51) Int. Cl.: G02B 21/00, G01N 21/64, G02B 21/16, G02B 21/36, G01N 21/13, G02B 21/26, G02B 21/34

(54) **A SAMPLE HOLDER FOR IMAGING A PLURALITY OF SAMPLES**

(71) Applicant: European Molecular Biology Laboratory, 69117 Heidelberg (DE)
(72) Inventor: FALK, Henning, 69117 Heidelberg (DE); HUFNAGEL, Lars, 69117 Heidelberg (DE); AULEHLA, Alexander, 69117 Heidelberg (DE)
(74) Representative: Harrison, Robert John

(57) **Abstract**

A sample holder (5) comprises one or more elongated sample tubes (15). The one or more elongated sample tubes (15) are adapted for accommodating a plurality of samples (16) to be imaged at an imaging position (25). The imaging position (25) is defined by at least one illumination objective lens (20A, 20B) and at least one detection objective lens (30) of a microscope (100). A microscope (100) is disclosed, comprising at least one illumination objective lens (20A, 20B) and at least one detection objective lens (30), which define an imaging position (25). The microscope (100) further comprises a sample holder (5) for holding (225) a plurality of samples (16). The sample holder (5) is moveable with respect to the imaging position (25). A method for imaging (700) a plurality of samples (16) by means of the microscope (100) is disclosed.

## Description

### Field of the invention

The present invention relates to a sample holder for holding a plurality of samples to be imaged. The present invention further relates to a microscope comprising the sample holder, at least one illumination objective lens and at least one detection objective lens. The present invention further relates to a method for imaging a plurality of samples with a microscope comprising at least one illumination objective lens and at least one detection objective lens.

### Background of the invention

Light-sheet microscopy is an increasingly popular technique to image biological samples at high speed, with a high three-dimensional resolution, and using a moderate light dose. Light-sheet microscopes have an illumination light path and a detection light path. The illumination light path and the detection light path are arranged substantially perpendicularly to each other at the position of the biological sample.

A light-sheet microscope is described, for example, in the European Patent EP 2 107 408. In this disclosure, a separate stage moves the biological sample to be imaged relative to the focus of the detection light path. The biological sample is arranged and held in a sample capillary or a sample tube, which is arranged perpendicularly to the plane formed by the optical axes of the illumination objective lens and the detection objective lens. The sample tube may be arranged vertically in the direction of gravity. The biological sample in the sample tube is embedded in a transparent gel. The sample stage can be rotated around the vertical axis to enable imaging of the sample from different angles.

Typically, a single sample tube is arranged in the microscope at a time. The sample to be imaged is imaged over a period of time, for example during development or growth of the sample (e.g. an embryo). This requires imaging of the biological sample at regular intervals over several hours or possibly days, which blocks use of the microscope for imaging other samples.

There is a need to increase the through-put of such a microscope.

### Summary of the invention

One way of achieving an increase in throughput is the imaging of several samples in parallel in such a microscope by deploying a sample holder according to this disclosure in the microscope. The sample holder of this disclosure enables such parallel imaging of a plurality of samples. The sample holder comprises one or more elongated sample tubes. The one or more elongated sample tubes are adapted for accommodating a plurality of samples to be imaged at an imaging position. The imaging position is defined by at least one illumination objective lens and at least one detection objective lens of a microscope.

The sample holder may comprise a tube support that removably holds the one or more elongated sample tubes.

The sample holder may further comprise a pick-up mechanism for picking up from a holding position a selected one of the one or more elongated sample tubes.

The document also teaches a microscope comprising at least one illumination objective lens and at least one detection objective lens, which define an imaging position. The microscope further comprises a sample holder for holding a plurality of samples. The sample holder comprises one or more sample tubes and is moveable with respect to the imaging position

The sample holder may be arranged on a stage for rotating and moving the sample holder.

A tube support of the sample holder for holding the one or more sample tubes may comprise a pick-up mechanism for picking up from a holding position a selected one of the one or more sample tubes.

The microscope may further comprise a rotation mechanism, arranged on the stage, for rotating a selected one of the one or more elongated sample tubes relative to the sample holder.

The microscope may further comprise a displacement mechanism, arranged in the microscope, for displacing the one or more sample tubes with respect to the tube support.

The one or more elongated sample tubes, the at least one illumination objective lens, and the at last one detections objective lens may be submerged in a medium.

A method for imaging a plurality of samples at an imaging position is also disclosed. The imaging position is defined by at least one illumination objective lens and at least one detection objective lens of a microscope. The method comprises selecting one of the one or more sample tubes; positioning at the imaging position the selected one of the one or more elongated sample tubes; positioning at the imaging position the at least one of the plurality of samples, arranged in the selected one of the one or more sample tubes; orienting at the imaging position the at least one of the plurality of samples, arranged in the selected one of the one or more sample tubes; illuminating the at least one of the plurality of samples through the illumination objective lens; collecting with the at least one detection objective lens light coming from the at least one of the plurality of samples at the imaging position; and imaging the light collected with the at least one detection objective lens.

The positioning at the imaging position of the selected one of the one or more elongated sample tubes may comprise moving a sample holder. The sample holder holds the one or more elongated sample tubes.

The positioning at the imaging position of the selected one of the one or more elongated sample tubes may comprise picking up from a tube rack, and moving to the imaging position, the selected one of the one or more elongated sample tubes.

The orienting at the imaging position of the at least one of the plurality of samples comprises rotating selected one of the one or more elongated sample tubes.

### Detailed description of the Figures

FIG.1 shows a portion of a microscope with an elongated sample tube positioned at an imaging position;
FIG. 2 shows a portion of a microscope with a sample holder according to one aspect of the invention, on which one or more elongated sample tubes are arranged, with one elongated sample tube positioned at an imaging position;
FIG. 3A shows a portion of a microscope with a sample holder according to another aspect of the invention, on which one or more elongated sample tubes are arranged, with one elongated sample tube displaced from a holding position and positioned at an imaging position;
FIG. 3B is a side elevational view of the portion of the microscope shown in FIG. 3A;
FIG. 4A shows a portion of a microscope according to a further aspect of the invention, in which one or more elongated sample tubes are arranged, with one elongated sample tube removed from a holding position and positioned at an imaging position;
FIG. 4B is a side top plan of the portion of the microscope shown in FIG. 4A;
FIG. 5A shows a portion of a microscope according to yet a further of the invention, in which one or more elongated sample tubes are arranged, with one elongated sample tube removed from a holding position and positioned at an imaging position;
FIG. 5B is a top plan view of the portion of the microscope shown in FIG. 5A.
FIG. 6 shows an example of a sample tube.
FIG. 7 shows an example of a microscope.
FIG. 8 shows a method according to the invention.
FIG. 9 is a top view of an aspect of the microscope, in which some sample tubes are arranged on a tube rack.
FIG. 10A is a partial view of a microscope comprising a pick-up mechanism.
FIG. 10B shows an alternative pick-up mechanism.
FIG. 10C shows a further alternative pick-up mechanism.
FIG. 11 shows a stage for supporting elongated sample tubes.
FIG. 12 shows an aspect of the elongated sample tubes.
FIG. 13 shows a part of a microscope comprising a rotation mechanism.
FIG. 14 shows a part of a microscope comprising a displacement mechanism.

### Detailed description of the embodiments

The invention will now be described in detail. Drawings and examples are provided for better illustration of the invention. It will be understood that the embodiments and aspects of the invention described herein are only examples and do not limit the scope of protection in any way. The invention is defined by the claims and their equivalents. It will be understood that features of one aspect or embodiment of the invention can be combined with the features of a different aspect or aspects and or embodiments of the invention.

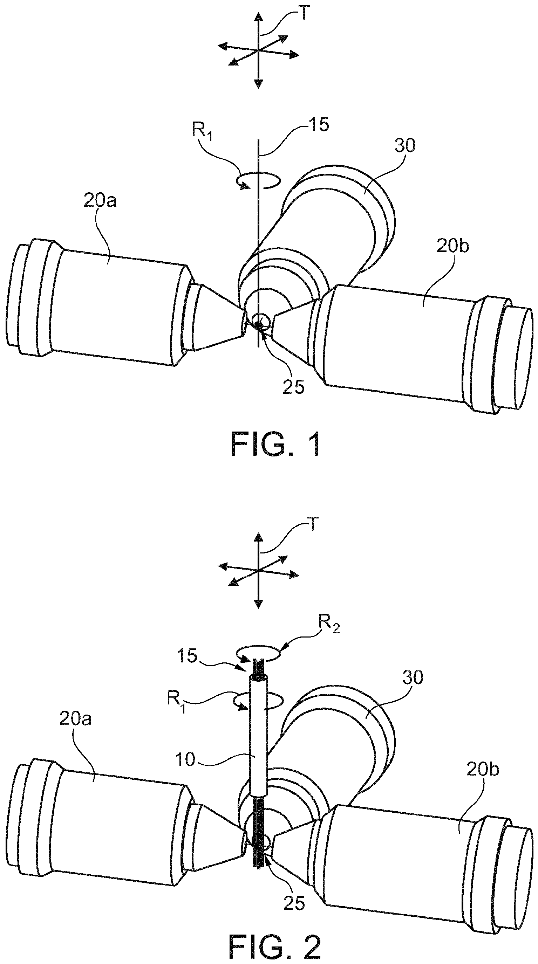

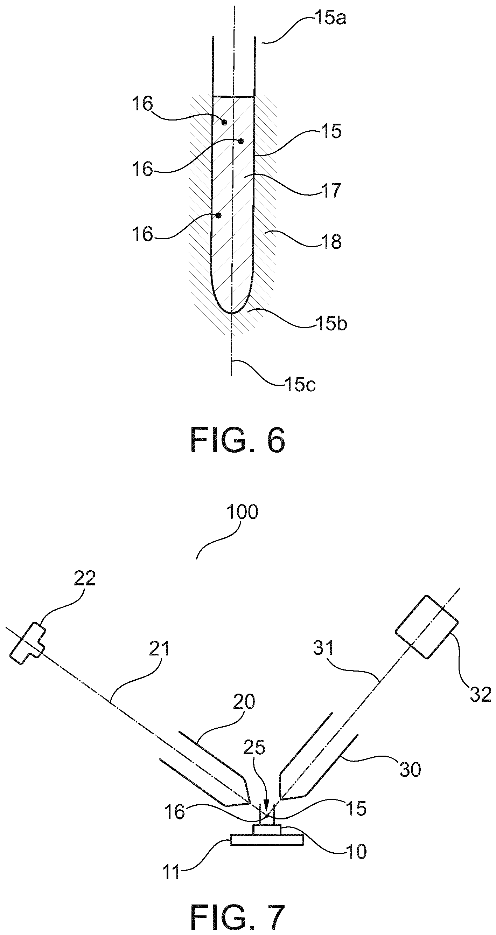

FIG. 1 shows a portion of a light-sheet microscope 100 according to the state of the art. A non-limiting example of the microscope 100 is shown in outline in FIG. 7. The microscope 100 has at least one illumination objective lens 20 and at least one detection objective lens 30. In the aspect of the microscope 100 shown in FIG. 1, two illumination objective lenses 20a, 20b and a detection objective lens 30 are shown. The illumination objective lenses 20a, 20b and the detection objective lens 30 are part of the microscope 100. The microscope 100 may only comprise one single illumination objective lens 20, or more than two of the objective lens 20. Likewise, the microscope 100 may comprise more than one of the detection objective lenses 30. The microscope 100 may have specifications as known from the European patent EP 2 107 408, the disclosure of which in its entirety is incorporated herein by reference.

The at least one illumination objective lens 20 and the at least one detection objective lens 30 define an imaging position 25. For imaging, a position within or on a surface of a sample to be imaged coincides with the imaging position 25.

The illumination objective lens 20a, 20b guides at least one illumination light beam 21 coming from a light source 22 towards the imaging position 25. The illumination objective lens 20a thus enables illuminating the plurality of samples 16 at the imaging position 25.

The detection objective lens 30 collects light coming from the imaging position 25 and impinging on the at least one detection objective lens 30. The detection objective lens 30 forms a detection light beam 31 from the collected light. The at least one detection objective lens 30 thus enables detecting light coming from the plurality of samples 16 at the imaging position 25. The light coming from the plurality of samples 16 may comprise emitted, reflected, fluorescent or scattered light. The detection objective lens 30 thus enables imaging the plurality of samples 16 by guiding the collected light to a detector 32, such as a CCD (charge-coupled device) detector, and/or an ocular lens.

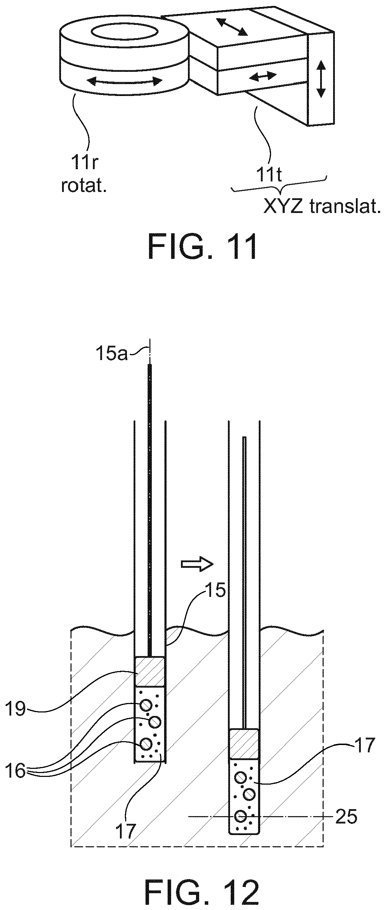

An elongated sample tube or sample capillary 15 (see FIGS. 6 and 12) is arranged within the microscope 100. The elongated sample tube 15 is depicted to be of a substantially cylindrical shape. In the aspect shown in FIG. 12, the elongated sample tube 15 comprises two open ends disposed oppositely in a longitudinal direction along a cylinder or symmetry axis 15c of the elongated sample tube 15.

One or more samples 16 are arranged in the elongated sample tube 15. The one or more samples 16 are embedded in a gel 17. The gel 17 may be transparent.

A plunger 19 may be inserted into the elongated sample tube 15. The plunger 19 is adapted to slide on an inner surface of the elongated sample tube 15. The plunger 19 may be used to suspend the one or more samples 16 in gel 17. The gel 17 may be able to harden and thus turn into a solid gel cylinder with the one or more samples 16 embedded therein. The hardened gel cylinder 26 may be extruded from the elongated sample tube 15 by applying a pushing force on the gel cylinder 26 by means of the plunger 19. The gel cylinder 26 is thus moved towards one of the open ends of the sample tube 15 and out of the sample tube 15. The one or more samples 16 may thus be imaged at the imaging position 25 without interference from the elongated sample tube 15 with the illumination light beam 21 or the detection light beam 31.

The elongated sample tube 15 may also have a different shape compared to the substantially cylindrical shape shown in FIGS. 6 and 12. The elongated sample tube 15 may have a rotationally symmetrical shape or a tapering shape. The elongated sample tube 15 may, for instance, have a flaring or flanged end. The elongated sample tube 15 may comprise an opening at one end 15a, e.g. the flaring or flanged end, and be closed at the other end 15b.

The elongated sample tube 15 is arranged to be positioned at the imaging position 25. Throughout this disclosure, the positioning of the elongated sample tube 15 at the imaging position 25 is to be understood as an arrangement, in which the imaging position 25 coincides with a position within or on a surface to the elongated sample tube 15.

The elongated sample tube 15 is furthermore arranged to be positioned at the imaging position 25 so that the at least one of the plurality of samples 16 is positioned at the imaging position 25. Throughout this disclosure, the positioning of the at least one of the plurality of samples 16 is to be understood as an arrangement, in which the imaging position 25 coincides with a position within or on a surface of the at least one of the plurality of samples 16.

In FIG. 1, the elongated sample tube 15 is arranged substantially perpendicularly to a plane defined by optical axes of the illumination objective lens 20 and the detection objective lens 30. In one aspect, the elongated sample tube 15 is arranged substantially vertically (in the direction of gravitational attraction), and the plane defined by the optical axes of the illumination objective lens 20 and the detection objective lens 30 is a substantially horizontal plane normal to the vertical of the elongated sample tube 15.

The elongated sample tube 15 may be supported by a stage 11 (see FIG. 11), which is moveable in three dimensions T and rotatable about a rotational axis R1. The rotational axis R1 may be arranged at a normal to the plane defined by the optical axes of the illumination objective lens 20 and the detection objective lens 30. The rotational axis R1 may be substantially vertically arranged. Thereby the elongated sample tube 15 may be translated in the three dimensions T and rotated around the rotation axis R1, and thus moved with respect to the imaging position 25.

This aspect of the invention allows for positioning and orienting the plurality of samples 16 at the imaging position 25. Thus, this aspect of the invention enables multi-sample and multi-angle imaging of the plurality of samples 16. However, due to the size of the one or more samples 16 or requirements regarding positioning and orienting, normally only one single one of the samples 16 is arranged in the elongated sample tube 15. It will be appreciated that when a single one of the samples 16 is arranged in the elongated sample tube 15 multi-sample imaging is not possible.

FIG. 2 shows a further aspect of the present invention. A sample holder 5 is arranged in the microscope 100. One or more of the elongated sample tubes 15, which accommodate the plurality of samples 16 to be imaged, are arranged on a tube support 10. In one aspect, the one or more elongated sample tubes 15 are arranged on the tube support 10 substantially in parallel to each other, e.g. along a substantially vertical direction. The arrangement of the plurality of sample tubes 15 on the tube support 10 enables parallel imaging of the plurality of samples 16.

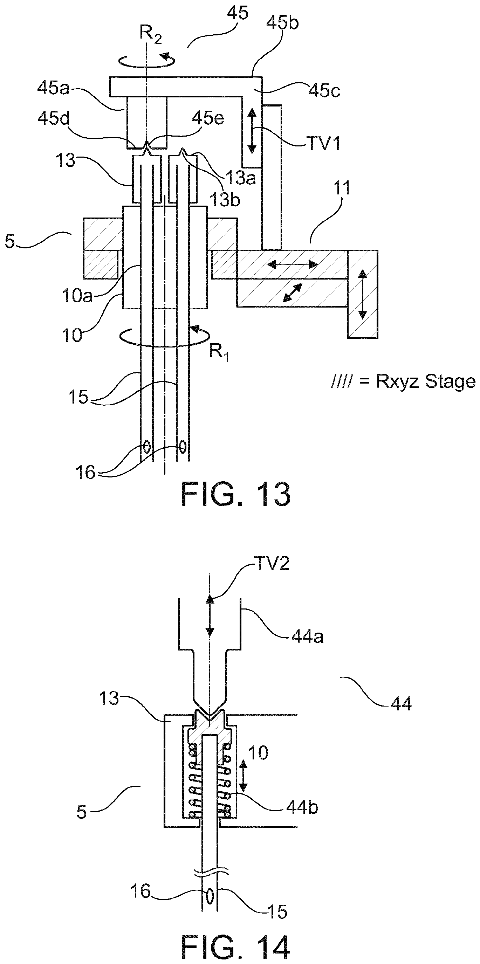

The tube support 10 may comprise one or more sockets or openings or slots 10a (see FIG. 13), which receive the one or more elongated sample tubes 15.

The tube support 10 and the sample holder 5 are supported by a stage 11 (see FIG. 11), which is moveable in the three dimensions T. The sample holder 5, the one or more elongated sample tubes 15, which are arranged on the tube support 10, as well as the plurality of samples 16, accommodated in the one or more elongated sample tubes 15, are thus moveable with respect to the imaging position 25.

The stage 11 is furthermore rotatable about the rotational axis R1. The sample holder 5 with the plurality of samples 16, accommodated in the one or more elongated sample tubes 15, is thus rotatable with respect to the imaging position.

FIG. 11 shows an example of the stage 11. The stage 11 comprises an R-stage 11r, and a xyz-stage 11t with an x-stage, a y-stage, and a z-stage. The R-stage 11r is adapted to rotate the elongated sample tube 15 around the rotational axis R1. The x-stage is adapted to move the elongated sample tube 15 in an x-direction. The y-stage is adapted to move the elongated sample tube 15 in a y-direction. The z-stage is adapted to move the elongated sample tube 15 in a z-direction.

The sample holder 5 allows therefore for selecting one of the one or more elongated sample tubes 15 to be positioned at the imaging position 15 by moving the stage 11. Thereby, the plurality of samples 16 may be imaged in parallel.

Furthermore, the sample holder 5 allows for choosing a portion to be imaged or an orientation of one of the plurality of samples 16, accommodated in the selected one of the elongated sample tubes 15. Thereby, different portions of one chosen one of the plurality of samples 16 may be imaged, and the chosen one of the plurality of samples 16 may be imaged at multiple orientations.

In case the selected one of the elongated sample tubes 15 comprises several ones of the plurality of samples 16, the sample holder 5 further allows for choosing a chosen one among the several ones of the plurality of samples 16 to be imaged at the imaging position 25.

Each one of the one or more elongated sample tubes 15 is arranged on the tube support 10 to be rotatable around a further rotational axis R2. The openings or holes 10a of the tube support 10 may rotatably receive the one or more sample tubes 15. The rotational axis R2 may be substantially vertically arranged. In the case that the one or more elongated sample tubes 15 are substantially cylindrically shaped, the rotational axis R2 may be parallel to, or coincide with, the cylinder or symmetry axis 15c (see FIGS. 6 and 12) of the substantially cylindrically shaped sample tubes 15.

For rotation around the rotational axis R2, in one aspect, a rotation mechanism 45 may be arranged in the microscope 100. In the aspect shown in FIG. 13, the rotation mechanism 45 is arranged on the stage 11, in particular on the xyz-stage of the stage 11. The rotation mechanism 45 comprises a rotational output element 45a, configured to transmit rotational movement to a tube cap 13, and an arm 45b. The arm 45b is arranged on the xyz-stage 11t and can be moved along a substantially vertical direction TV1. The arm 45b comprises a flexion 45c and holds the rotational output element 45a such that an engaging end 45d of the rotational output element 45a is directed towards the selected one of the elongated sample tubes 15.

By moving the rotation mechanism 45 in the substantially vertical direction TV1, the rotational output element 45a can be moved towards and brought into contact with the tube cap 13 of the selected one of the elongated sample tubes 15. The engaging end 45d thereby comes into contact with the tube cap 13. The tube cap 13 and the selected one of the elongated sample tubes 15 are fitted onto one another. In the aspect shown in FIG. 13, the tube cap 13 is attached to the selected one of the elongated sample tubes 15. In the aspect shown in FIG. 13, the tube cap 13 is attached to the top end of the selected one of the elongated sample tubes 15. Other ones of the elongated sample tubes 15 may also have tube caps 13 attached thereto.

When contacting the tube cap 13, the rotation mechanism 45 operatively couples with the selected one of the elongated sample tubes 15 for rotating the selected one of the elongated sample tubes 15. The rotation mechanism 45 and the tube cap 13 couple to one another by means of the engaging end 45d and a contacting surface 13a of the tube cap 13. The engaging end 45d may comprise an arrangement of one or more recesses 45e, and the contacting surface 13a may comprise a corresponding arrangement of one or more protrusions 13b. The recesses 45e and the protrusions 13b connect and mate when the engaging end 45d comes into contact with and exerts pressure on the contacting surface 13a of the tube cap 13. In one aspect, the protrusions 13b may be steel balls 13b, arranged on the contacting surface 13a, and the recesses 45e may be shaped to at least partially accommodate the steel balls 13b. This aspect allows micrometer precision in the coupling of the rotation mechanism 45 and the tube cap 13. It is understood that the invention is not limited to the afore-described configuration. For instance, the engaging end 45d may comprise protrusions, and the contacting surface 13a may comprise corresponding recesses. Furthermore, the protrusions can be other shapes than steel balls.

In a further aspect (not shown), a rotation mechanism can be arranged, which operatively couples with some or all of the elongated sample tubes 15 for simultaneously rotating the one or more elongated sample tubes 15.

Rotating any one of the elongated sample tubes 15 around the rotational axis R2 allows for orienting, with respect to the imaging position 25, the selected one of the elongated sample tubes 15. The samples 16 in the elongated sample tube 15 may therefore be oriented in any direction with respect to the imaging position 25. As a result, shadowing effects on imaging of the samples 16 may be reduced by varying the orientation of the sample 16. Similarly, absorption effects on the imaging of the samples 16 may also be reduced by varying the orientation of the imaged sample 16. This arrangement enables multi-angle imaging of the samples 16, and a portion of interest of the plurality of samples 16 may be imaged from different angles.

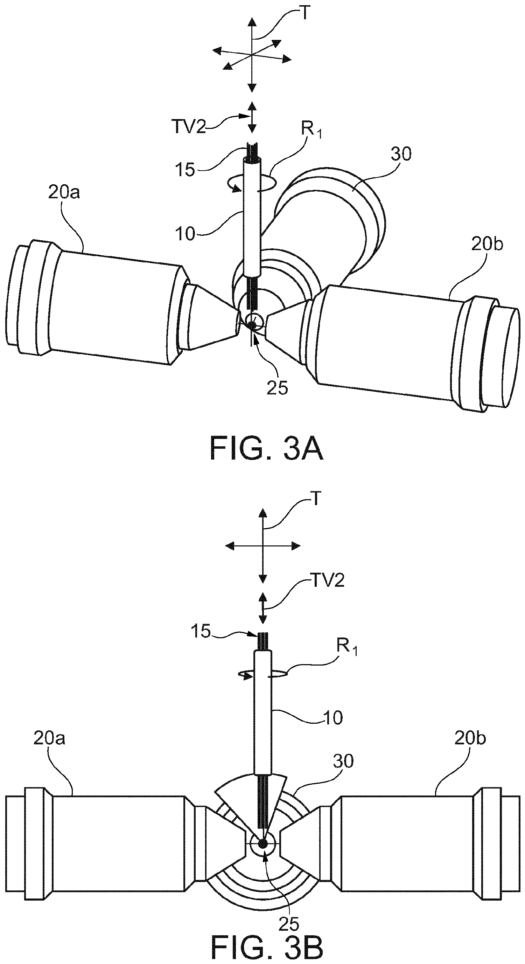

FIGS. 3A and 3B show a further aspect of the present invention. This aspect differs from the aspect shown in FIG. 2 in that the one or more elongated sample tubes 15 are not rotatable around the rotational axis R2 (see FIG. 2). In other words, the one or more sample tubes 15 are not individually rotatable (i.e. around the rotational axis R2), but only rotatable as a collective whole (around the rotational axis R1 of the stage 11).

In the aspect shown in FIG. 3, the one or more elongated sample tubes 15 are displaceable with respect to a holding position, in which the one or more elongated sample tubes 15 are arranged on the tube support 10. The microscope 100 or the tube support 10 comprises a displacement mechanism (see FIG. 14). The displacement mechanism displaces a selected one of the elongated sample tubes 15.

FIG. 14 shows an aspect of the displacement mechanism 44. The displacement mechanism 44 is arranged in the microscope 100 in vicinity of the imaging position 25 (not shown in FIG. 14). The displacement mechanism is mounted on the R-stage 11r of the stage 11. The displacement mechanism 44 comprises one or more of a displacement element 44a. In one aspect, several ones of the displacement elements 44a are arranged at any one of the holes or openings 10a of the tube support 10. In another aspect, the displacement mechanism 44 comprises a single one of the displacement element 44a, arranged on a further one of translational xyz-stage 11t, and/or on a further one of the rotational R-stage 11r.

In a further aspect, the rotation mechanism 45 may comprise the displacement mechanism 44, and rotational output element 45a comprises the displacement element 44a. When moving the rotation mechanism 45 in the substantially vertical direction TV1, the rotational output element 45a can be brought into contact with the tube cap 13 of the selected one of the elongated sample tubes 15. Subsequent to coming into contact, the rotation mechanism 45 may be further moved in the substantially vertical direction TV1 and thus displace the selected one of the elongated sample tubes 15. When the rotation mechanism 45 comprises the displacement mechanism 44, a chamber filled with a water or culture medium 18 (described below), in which, amongst others, the one or more sample tubes are arranged, can be of a smaller size and thus require a smaller volume of water or culture medium 18.

The displacement element 44a may be a rod 44a. The rod 44a is displaceable towards the imaging position 25 in a displacement direction TV2, for instance in a substantially vertical displacement direction TV2, by means of a motor, e.g. an electric motor such as a stepper motor (not shown).

When the rod 44a is displaced, and the selected one of the elongated sample tubes 15 is positioned at a predetermined distance in the displacement direction TV2 relative to the rod 44a, the rod 44a eventually comes into contact with the tube cap 13 of the selected one of the elongated sample tubes 15. In one aspect, several ones of the tube cap 13 are arranged in the holes or slots 10a of the tube support 10. The rod 44a then pushes the selected one of the elongated sample tubes 15 towards the imaging position 25 against a spring force of a spring 44b of the displacement mechanism 44. In one aspect, several ones of the spring 44b are arranged on the tube support 10 within the holes or openings or slots 10a. The spring 44b supports the tube cap 13. The spring force of the spring 44b biases the tube cap 13, and the sample tube 15 fitted thereto, to a holding position.

The one or more elongated sample tubes 15 are thus displaceable from the holding position towards the imaging position 25. The selected one of the sample tubes 15 may be positioned at the imaging position 25 by means of the stage 11. Thereby, the samples 16 that are accommodated in the selected one of sample tubes 15 may be positioned at the imaging position 25 for imaging.

The displacement mechanism 44 allows for separating the imaging position 25 and a holding position of the one or more elongated sample tubes 15. This separation is advantageous when the space at the imaging position 25, between the at least one illumination objective lens 20a, 20b and the at least one detections objective lens 30, is limited. Thus, more sample tubes 15 may be arranged at the holding position than could be arranged at the imaging position 25.

Furthermore, with the displacement mechanism 44, there is no need for a rotation mechanism 45 that is adapted to individually rotate the elongated sample tubes 15 around the rotational axis R2 (see FIG. 2). The displacement mechanism 44 in combination with the stage 11 allows for orienting with respect to the imaging position 25 the selected one of the elongated sample tubes 15 by rotating the sample holder 5 around the rotational axis R1 and translating the tube support 5 such that the selected one of the elongated sample tubes 15 is positioned between the rod 44a and the imaging position 25. This arrangement enables multi-angle imaging of the plurality of samples 16. Thus, a portion of interest of the plurality of samples 16 may be imaged in more detail or from different angles.

As described above, however, in another aspect, the rotation mechanism 45 may comprise the displacement mechanism. In this case, individual rotation of a selected one of the elongated sample tubes 15 is provided. This aspect allows for observation of the plurality of samples 16 when less space is available at the imaging position 25. Furthermore, this aspect requires less of the culture medium 18.

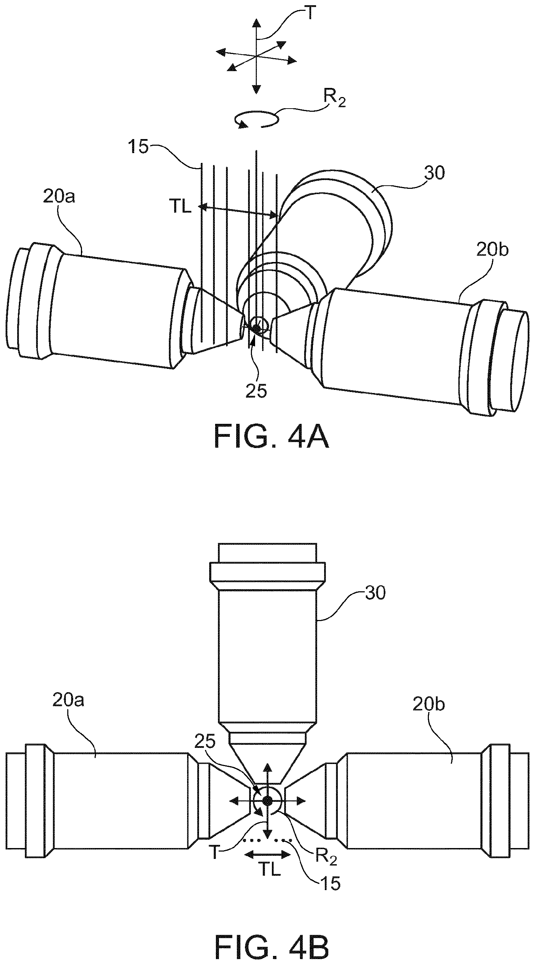

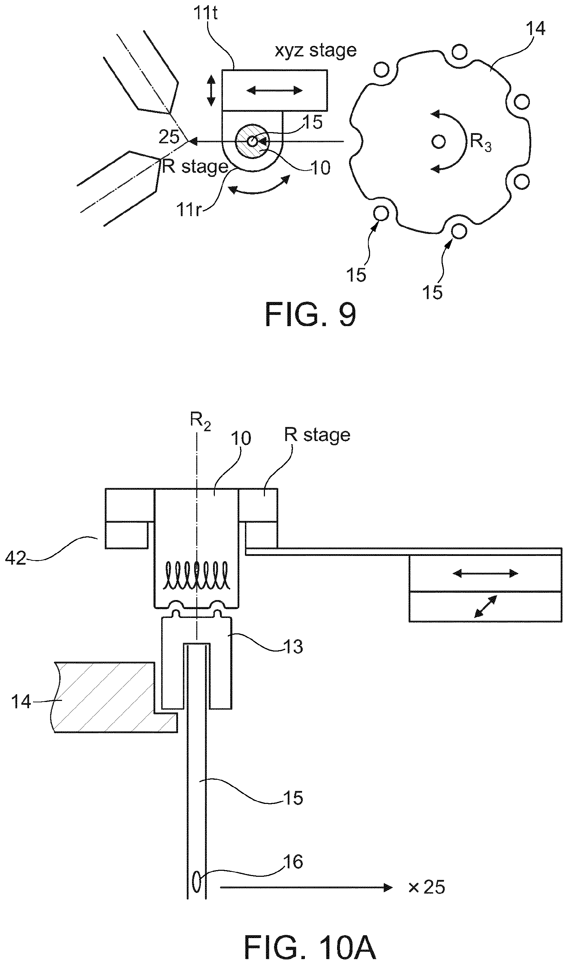

FIGS. 4A and 4B show a further aspect of the invention. In this aspect, the elongated sample tubes 15 are arranged linearly on a tube rack or magazine 14 (see FIG. 10A). This aspect of the invention differs from the aspects shown in FIGS. 2, 3A, and 3B in that not all of the elongated sample tubes 15 are arranged on the tube support 10. A pick-up mechanism 42 moves the elongated sample tubes 15 between the tube rack 14 and the imaging position 25, as described below.

The tube rack 14 is arranged in the microscope 100 at a distance from the imaging position 25. The sample holder 5, as explained above, moves and positions the selected one of the elongated sample tubes 15 at the imaging position 25, and is thus limited in the number of elongated sample tubes 15 that can be arranged thereon. Thus, the limitations of the space at the imaging position 25 between the at least one illumination objective lens 20a, 20b and the at least one detection objective lens 30 can be avoided by arrangement of the tube rack 14 in the microscope 100. Such a configuration and arrangement of the tube rack 14 allows for arranging a larger number of the one or more elongated sample tubes 15 in the microscope 100.

Furthermore, the tube rack 14 according to this aspect of the invention may have a shape and configuration adapted to the geometry of the microscope 100 and/or imaging system, in which the tube rack 14 is arranged.

In the aspect of FIGS. 4A and 4B, the tube rack 14 is linearly translatable along a direction TL. The tube rack 14 is supported by a tube rack stage (not shown), which is linearly translatable along the direction TL in this aspect. By linearly translating the tube rack 14, the selected one of the elongated sample tubes 15 may be moved to a position accessible by the pick-up mechanism 42.

The microscope 100 according to the aspect depicted in FIGS. 4A and 4B further comprises a pick-up mechanism 42 for picking up the selected one of the elongated sample tubes 15.

In the aspect shown in FIG. 10A, the sample holder 5 comprises the pick-up mechanism 42. The pick-up mechanism 42 removes the selected one of the elongated sample tubes 15 from the tube rack 14. The tube support 10 comprises a coil 43 electrically connected to a power source (not shown). When connected to the power source, the coil 43 generates a magnetic field. The selected one of the sample tubes 15 may comprise a tube cap 13 attached to a top thereof. The other elongated sample tubes 15 may also comprise tubs caps 13 attached to the tops thereof. In this aspect, the tube cap 13 comprises a magnet or magnetic material. The tube cap 13 may be entirely made of a magnetic material. When the tube support 10 is positioned above the selected one of the elongated sample tubes 15, the magnetic field generated by the coil 43 may attract the magnet or magnetic material of the tube cap 13 and thus pick up and remove from the tube rack 14 the selected one of the elongated sample tubes 15.

In this aspect, the stage 11 of the sample holder 5 moves the selected one of the elongated sample tubes 15 in the three dimensions T and positions the selected one of the elongated sample tubes 15 at the imaging position 25. Furthermore, the sample holder 5 may rotate the selected one of the elongated sample tubes 15 about the rotational axis R2.

In further aspects of the invention, other arrangements of the coil 43 and the magnet of magnetic material of the tube cap 13 are conceivable. For example, the magnet or the magnetic material of the tube cap 13 may be arranged on the edge of the tube cap 13 at an azimuthal position with respect to the cylinder axis 15c of the elongated sample tube 15. The magnet or magnetic material may further be arranged on an outside surface of the each one of the elongated sample tubes 15. The pick-up mechanism 43 may then approach the selected one of the elongated sample tubes 15 horizontally, with the coil 43 correspondingly arranged, instead of vertically to pick up the selected one of the elongated sample tubes 15.

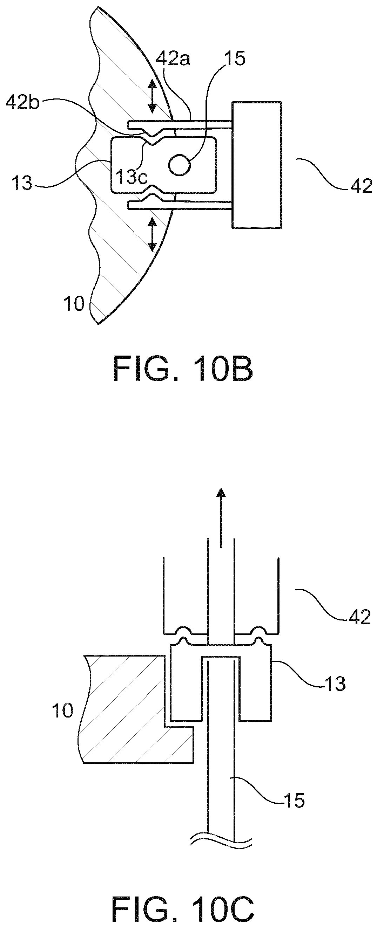

Other aspects of the pick-up mechanism 42 for picking up the selected one of the elongated sample tubes 15 are conceivable. The pick-up mechanism 42 may, for instance, comprise mechanical devices for mechanically supporting the selected one of the elongated sample tubes 15, such as a means for gripping, hooking, plug-connecting, engaging, or bayonet supporting. Each one of the elongated sample tubes 15 or the tube cap 13 may comprise corresponding mechanical devices, such as a gripping sleeve, a hooking flange or protrusion, a plugging portion, an engaging portion, or a bayonet-like flange or protrusion, for operatively communicating with the mechanical devices of the pick-up mechanism 42. FIGS. 10B and 10C show two exemplary alternative aspects of the pick-up mechanism 42.

In FIG. 10B, the tube cap 13, fitted onto the selected one of the one or more sample tubes 15, can be grabbed by the pick-up mechanism 42. The pick-up mechanism 42 shown in FIG. 10B, comprises arms 42a that can contact the tube cap 13 from two opposing sides. The arms 42a may thus grab and hold the tube cap 13 and the selected one of the one or more sample tubes 15. The arms 42a may comprise protrusions 42b, and the tube cap 13 may comprise corresponding recesses 13c. Thus, a precise pick-up is possible.

In FIG. 10C, the pick-up mechanism 42 comprise a vent 42c, fluidly connected to a pump (not shown) and having an opening 42d on a lower side 42e facing the tube cap 13. The pump may produce a vacuum in the vent 42c and at the opening 42d. The produced vacuum may pull the tub cap 13 towards the lower side 42e and thus hold the tube cap 13 and the selected one of the one or more sample tubes 15.

The sample holder 5, the tube rack 14, the at least one illumination objective lens 20a, 20b, and the at least one detection objective lens 30 may be, partially or totally, submerged in water or a culture medium 18 (see FIG. 6). The sample holder 5, the tube rack 14, the at least one illumination objective lens 20a, 20b, and the at least one detection objective lens 30 may be arranged in a chamber (not shown) filled with a water or culture medium 18. This common arrangement in the chamber allows for continuous culturing conditions, to which the plurality of samples 16 is exposed, and thus avoids any detrimental effects by changing the culturing conditions.

The sample holder 5, the tube rack 14, the illumination objective lens 20a, 20b, and the detection objective lens 30 may, however, also be arranged in different chambers, e.g. a culturing chamber (not shown) filled with a first one of the culturing medium 18 and an imaging chamber (not shown) filled with an optically favorable second one of the culturing medium 18. Such separate arrangement in a culturing chamber and an imaging chamber allows for improved imaging of the plurality of samples 16 when the culturing medium 18 has optically less favorable properties.

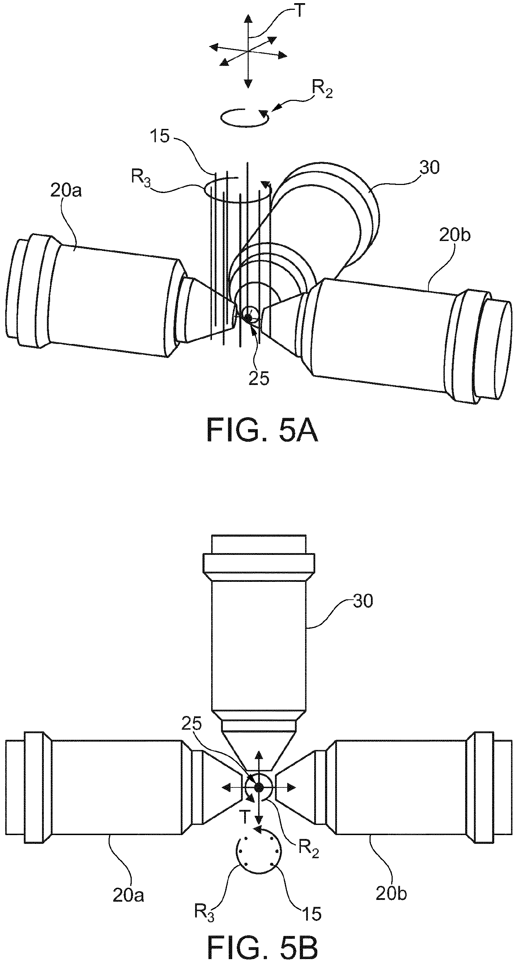

FIGS. 5A and 5B show a further aspect of the invention. This aspect of the invention differs from the aspect shown in FIGS. 4A and 4B in that the one or more elongated sample tubes 15 are arranged circularly on the tube rack 14 (see FIG. 9). This aspect of the invention differs from the aspects shown in FIGS. 2, 3A, and 3B in that not all of the elongated sample tubes 15 are arranged on the tube support 10. The pick-up mechanism 42 (see FIG: 10) moves the elongated sample tubes 15 between the tube rack 14 and the imaging position 25.

In the aspect shown in FIGS. 5 and 9, the tube rack 14 is rotatable around a rotational axis R3. The tube rack 14 is supported by the tube rack stage (not shown), which is rotatable in this aspect. By rotating the tube rack 14, the selected one of the elongated sample tubes 15 may be moved to a position accessible by the pick-up mechanism 42. This configuration allows for a more compact tube rack 14 in comparison to the tube rack 14 of the aspect of the invention shown in FIGS. 4A and 4B.

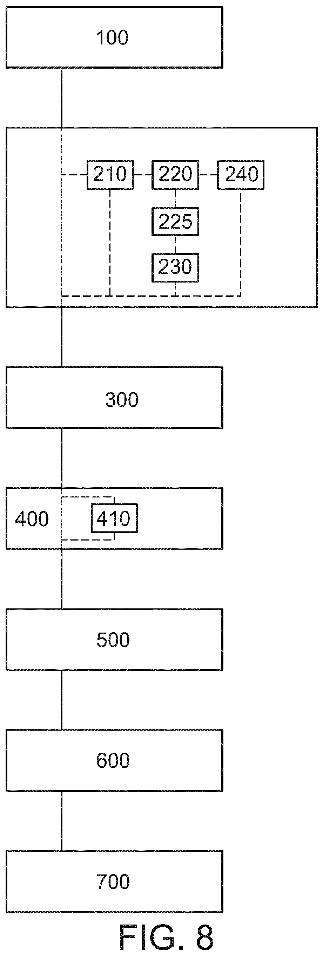

This document further teaches a method for imaging a plurality of samples 16 at an imaging position 25 (see FIG. 8). The imaging position 25 is defined by at least one illumination objective lens 20 and at least one detection objective lens 30 of a microscope 100.

The method comprises selecting 100 one of one or more sample tubes 15, in which at least one of the plurality of samples 16 to be observed is accommodated.

The method further comprises positioning 200 at the imaging position 25 the selected one of the elongated sample tubes 15, and positioning 300 at the imaging position 25 the at least one of the plurality of samples 16, arranged in the selected one of the samples tube 15.

In a further step the method comprises orienting 400 at the imaging position 25 the at least one of the plurality of samples 16, arranged in the selected one of the samples tubes 15.

In yet further steps the method comprises illuminating 500 the at least one of the plurality of samples 16 through the illumination objective lens, and collecting 600 with the at least one detection objective lens 30 light coming from the at least one of the plurality of samples 16 at the imaging position 25. The method further comprises imaging 700 the light collected with the at least one detection objective lens 30.

The positioning 200 at the imaging position 25 of the selected one of the elongated sample tubes 15 may comprise moving 210 the sample holder 5.

The positioning 200 at the imaging position 25 of the selected one of the elongated sample tubes 15 may comprise picking up 220 from a tube rack 14, supporting or holding 225 on a tube support 10, and moving 230 to the imaging position 25, the selected one of the elongated sample tubes 15.

The supporting 225 on the tube support 10 of the selection one of the elongated sample tubes 15 may comprise attaching the selected one of the elongated sample tubes 15 to the tube support 10 by means of a magnetic force, by means of grabbing and holding, or by means of a vacuum.

The positioning 200 may comprise displacing 240 the selected one of the elongated sample tubes 15 from a holding position to the imaging position 25.

The orienting 400 at the imaging position 25 of the at least one of the plurality of samples 16 may comprise rotating 410 the selected one of the elongated sample tubes 15.

## Claims

1. A sample holder (10) comprising a plurality of elongated sample tubes (15), the plurality elongated sample tubes (15) being adapted for accommodating a plurality of samples (16) to be imaged at an imaging position (25), and the imaging position (25) being defined by at least one illumination objective lens (20) and at least one detection objective lens (30) of a microscope (100).

2. The sample holder (5) according to claim 1, wherein the sample holder (5) comprises a tube support (10) that removably holds the one or more elongated sample tubes (15).

3. The sample holder (5) according to claim 1 or 2, wherein the tube support (10) further comprises a pick-up mechanism (42) for picking up from a holding position a selected one of the one or more elongated sample tubes (15).

4. A microscope (100) comprising at least one illumination objective lens (20) and at least one detection objective lens (30), which define an imaging position (25), wherein the microscope (100) further comprises a sample holder (5) for holding a plurality of samples (16), the sample holder (5) comprising one or more sample tubes (15) and being moveable with respect to the imaging position (25).

5. The microscope (100) according to claim 4, wherein the sample holder (5) is arranged on a stage (11) for rotating and translating the sample holder (5).

6. The microscope (100) according to claim 4 or 5, wherein the sample holder (5) further comprises a tube support (10) for holding the one or more sample tubes (15).

7. The microscope (100) according to claim 6, wherein the tube support (10) further comprises a pick-up mechanism (42) for picking up from a holding position a selected one of the one or more elongated sample tubes (15)

8. The microscope (100) according to claim 5, further comprising a rotation mechanism (45), arranged on the stage (11), for rotating a selected one of the one or more elongated sample tubes (15).

9. The microscope (100) according to one of claims 4, 5 or 8, further comprising a displacement mechanism (44), arranged in the microscope (100), for displacing the one or more elongated sample tubes (15) with respect to the tube support (10).

10. The microscope (100) according to any of the clams 4 to 9, wherein the one or more elongated sample tubes, the at least one illumination objective lens (20), and the at last one detection objective lens (30) are submerged in a medium (18).

11. A method for imaging at an imaging position (25) a plurality of samples (16) accommodated in one or more sample tubes (15), the imaging position (25) being defined by at least one illumination objective lens (20) and at least one detection objective lens (30) of a microscope (100), the method comprising
- selecting (100) one of the one or more sample tubes (15);
- positioning (200) at the imaging position (25) the selected one of the one or more elongated sample tubes (15);
- positioning (300) at the imaging position (25) the at least one of the plurality of samples (16), arranged in the selected one of the one or more sample tubes (15);
- orienting (400) at the imaging position (25) the at least one of the plurality of samples (16), arranged in the selected one of the one or more sample tubes (15);
- illuminating (500) the at least one of the plurality of samples (16) through the illumination objective lens (20);
- collecting (600) with the at least one detection objective lens (30) light coming from the at least one of the plurality of samples (16) at the imaging position (25); and
- imaging (700) the light collected with the at least one detection objective lens (30).

12. The method according to claim 11, wherein the positioning (200) at the imaging position (25) of the selected one of the one or more elongated sample tubes (15) comprises moving (210) a sample holder (5) holding the one or more elongated sample tubes (15).

13. The method according to claim 11, wherein the positioning (200) at the imaging position (25) of the selected one of the one or more elongated sample tubes (15) comprises picking up (220) from a tube rack (14), holding 225 on a tube support 10, and moving (230) to the imaging position (25), the selected one of the one or more elongated sample tubes (15).

14. The method according to claim 11, wherein the positioning (200) at the imaging position (25) of the selected one of the one or more elongated sample tubes (15) comprises displacing 240 the selected one of the elongated sample tubes 15 from a holding position to the imaging position 25.

15. The method according to one of claims 11 to 14, wherein the orienting (400) at the imaging position (25) of the at least one of the plurality of samples (16) comprises rotating (410) the selected one of the one or more elongated sample tubes (15).
